# EUROPEAN PATENT APPLICATION

(11) **EP 3 528 516 A1**
(43) Date of publication of application: **21.08.2019**
(21) Application number: 18157544.0
(22) Date of filing: 20.02.2018
(51) Int. Cl.: H04W 4/70, H04W 12/08, H04L 29/06, H04L 12/28, G06F 3/0481, G06K 19/06

(54) **AUGMENTED REALITY DEVICE**

(71) Applicant: Siemens Schweiz AG, 8047 Zürich (CH)
(72) Inventor: Seidenbecher, Thomas, 90489 Nürnberg (DE)
(74) Representative: Maier, Daniel Oliver

(57) **Abstract**

Augmented reality device. A the mobile device (1) comprising: a first (2) and a second (3) wireless communication interface (2); a display (4); a graphics driver unit (5); a processor (6) communicatively coupled to the graphics driver unit (5), to the first wireless communication interface (2), and to the second wireless communication interface (3), the processor being configured to: receive identity data indicative of an identity of an appliance (7) from the first wireless communication interface (2); produce request data from the received identity data; send the request data to the remote server (7;8) via the second wireless communication interface (3); receive via the second wireless communication interface (3) response data from the remote server (7;8) in response to the request; produce status information data from the received response data; and send the status information data to the display (4) via the graphics driver unit (5).

## Description

### Background

The present disclosure relates to an augmented reality device in a technical environment. More particularly, the present disclosure focuses on a mobile device with functionality to display augmented reality and with functionality to connect to an appliance.

Technical appliances such as control and automation equipment as well as heating, air-conditioning and/or ventilation equipment frequently provide status indication. Information about an internal status of an appliance may be provided using displays such as liquid crystal displays or displays with organic light-emitting diodes. Information about an internal status of an appliance may also be provided using a single light-emitting diode or a plurality of light-emitting diodes. An appliance may use both displays and light-emitting diodes to communicate status information to an operator.

Displays and light-emitting diodes add to the cost and to the complexity of an appliance. The issue is further exacerbated by display drivers required to process signals to be sent to displays and by driver circuits connected to light-emitting diodes. Also, each of these components is another component that is prone to technical failure.

The international patent application WO2004/024232A1 was filed on 11 September 2003. WO2004/024232A1 teaches a medical device status information system. WO2004/024232A1 discloses a docking station 60 and a status monitor 62. A network 74 enables communication between docking station 60 and status monitor 62. The docking station 60 provides an automated external defibrillator 60 with a status indicator 88. Status indicator 88 may comprise a visual annunciator 20 such as a light-emitting diode.

The patent US5089809 issued on 18 February 1992. An application 623356 for US5089809 was filed on 7 December 1990. US5089809 deals with remote indication of appliance status. An appliance 22 such as a washing machine is shown on FIG 1 of US5089809. Appliance 22 connects to the AC wiring of a complex via a power cord 24 and a plug 26. The power cord 24 and the plug 26 also couple appliance 22 to a transmitter 28. Transmitter 28 upon detection of a predetermined condition of appliance 22 transmits a signal representing the detected condition to a remote status module 54. In an embodiment, transmitter 28 comprises a code generator 90 and a radio frequency generator 86. The code generator 90 is employed to modulate a radio frequency signal. A 160 kHz signal is then applied to lines 88 via radio frequency generator 86.

The patent US4916439 issued on 10 April 1990. An application 45725 for US4916439 was filed on 30 April 1987. US4916439 teaches a remote display arrangement for appliances. A remote display arrangement 10 with a detector 16 and with a receiving unit 18 is shown on FIG 1A of US4916439. Detector 18 is communicatively coupled to a washing machine 12 and to a dryer 22. Detector 16 provides an antenna 24 to transmit signals to receiving unit 18. Receiving unit 18 provides an antenna 26 to receive signals from detector 16. US4916439 also teaches an alternate receiving unit 300 with a liquid crystal display 310. Various types of appliance status signals such as cycle running time of a washing machine 12 or of a dryer 22 may be displayed on liquid crystal display 310.

The present disclosure enables display of information about appliances via augmented reality devices. The instant disclosure confers advantages in terms of reduced complexity and cost as well as advantages in terms of improved versatility.

### Summary

The instant disclosure teaches an augmented reality device such as a mobile device, in particular a mobile phone, a smart mobile phone, a tablet computer, a pair of virtual reality glasses and/or a virtual reality headset. The augmented reality device provides functionality to read an identity of an appliance such as, an automation appliance, a control appliance, a heating, ventilation, air-conditioning appliance, a smart valve appliance, and/or a hazard detection appliance. The identity may, by way of non-limiting example, be determined from a quick response code or from a barcode using a camera or a scanner. Status information is then requested about that particular appliance from a remote server. The remote server may be a web server running on the appliance. The remote server may also be a web server on the internet. Information about the status of the appliance is displayed to a user by the augmented reality device rather than being shown or indicated on the appliance itself.

The present disclosure provides an augmented reality device and/or a mobile device, the device comprising: a first wireless communication interface configured to receive from an appliance identity data indicative of an identity of the appliance; a second wireless communication interface configured for bidirectional communication with a remote server; a display; a graphics driver unit configured to produce a graphics signal and to send the graphics signal to the display; a processor communicatively coupled to the graphics driver unit, to the first wireless communication interface, and to the second wireless communication interface, the processor being configured to: receive identity data indicative of the identity of the appliance from the first wireless communication interface; produce request data from the received identity data;
send the request data to the remote server via the second wireless communication interface; receive via the second wireless communication interface response data from the remote server in response to the request data sent; produce status information data from the received response data; and send the status information data to the display via the graphics driver unit.

It is another object of the instant disclosure to provide an augmented reality device and/or a mobile device wherein the remote server is located remotely from the augmented reality device and/or from the mobile device.

It is also an object of the instant disclosure to provide an augmented reality device and/or a mobile device wherein communication from the appliance to the first wireless communication interface is unidirectional (as opposed to bidirectional) such that the first wireless communication interface may only receive identity data from the appliance. The first wireless communication interface may thus not send data such as identity data to the appliance. Any communication between the first wireless communication interface and the augmented reality device and/or mobile device goes in one direction only from the appliance to the first wireless communication interface.

It is also an object of the instant disclosure to provide an augmented reality device and/or a mobile device wherein communication from the graphics driver unit to the display is unidirectional (as opposed to bidirectional) such that the graphics driver unit may only send a graphics signal to the display. The graphics driver unit may thus not receive a signal such as a graphics signal from the display. Any communication between the graphics driver unit and the display goes in one direction only from the graphics driver unit to the display. It is envisaged that the graphics driver unit is an integral part of the processor. It is also envisaged that the graphics driver unit connects to the display via a communication bus.

It is yet another object of the instant disclosure to provide an augmented reality device and/or a mobile device wherein the second wireless communication interface communicates with the remote server via a predetermined communication bus protocol. The predetermined communication bus protocol may, in particular, be a connectionless communication bus protocol or a connection-oriented communication bus protocol. The remote server and the second wireless communication interface advantageously communicate via a wireless communication bus. It is envisaged that the second communication interface is an integral part of the processor.

It is still an object of the instant disclosure to provide an augmented reality device and/or a mobile device wherein the processor is configured to:
receive identity data indicative of an identity of an appliance from the first wireless communication interface;
decode the received identity data to produce decoded identity data; and
produce request data from the decoded identity data.

It is also a related object of the instant disclosure to provide an augmented reality device and/or a mobile device wherein the processor is configured to:
receive via the second wireless communication interface response data from the remote server in response to the request data sent;
decode the received response data to produce decoded response data; and
produce status information data from the decoded response data.

It is also a further object of the instant disclosure to provide an augmented reality device and/or a mobile device wherein the processor is configured to:
encode the request data to produce encoded request data; and
send the encoded request data to the remote server via the second wireless communication interface.

It is a further object of the instant disclosure to provide an augmented reality device and/or a mobile device wherein the first wireless communication interface is configured to:
receive from an appliance identity signals indicative of an identity of the appliance; and
demodulate the received identity signals to produce identity data indicative of an identity of the appliance.

It is a still further object of the instant disclosure to provide an augmented reality device and/or a mobile device wherein the second wireless communication interface is configured to:
receive from the remote server response signals in response to the request sent; and
demodulate the received response signals to produce response data (originating from the remote server in response to the request data sent).

It is also a further object of the instant disclosure to provide an augmented reality device and/or a mobile device wherein the second wireless communication interface is configured to:
receive request data and/or encoded request data from the processor;
modulate the received request data and/or the received encoded request data to produce a request signal; and
send the request signal to the remote server.

It is still another object of the instant disclosure to provide a non-transitory, tangible computer readable medium having instructions executable by a processor of an augmented reality device and/or of a mobile device that, when executed by the processor, cause the processor of the augmented reality device and/or of the mobile device, the device comprising a first wireless communication interface, a second wireless communication interface, a display, and a graphics driver unit in communication with the display, to perform:
receiving identity data indicative of an identity of an appliance from the first wireless communication interface;
producing request data from the received identity data;
sending the request data to a remote server via the second wireless communication interface;
receiving via the second wireless communication interface response data from the remote server in response to the request data sent;
producing status information data from the received response data; and
sending the status information data to the display via the graphics driver unit.

### Brief description of the drawings

Various features will become apparent to those skilled in the art from the following detailed description of the disclosed non-limiting embodiments. The drawings that accompany the detailed description can be briefly described as follows:
FIG 1 schematically depicts an augmented reality device, in particular a mobile device, according to the instant disclosure.
FIG 2 is a schematic showing communication channels between an augmented reality device, in particular between a mobile device, and an appliance and a remote server.
FIG 3 is a schematic showing communication channels between an augmented reality device, in particular between a mobile device, and an appliance with a remote server running on the appliance.
FIG 4 is a close-up detailed view of the first wireless communication interface and of the second wireless communication interface.
FIG 5 provides a close-up detailed view of a processor of an augmented reality device, in particular of a mobile device.

### Detailed decription

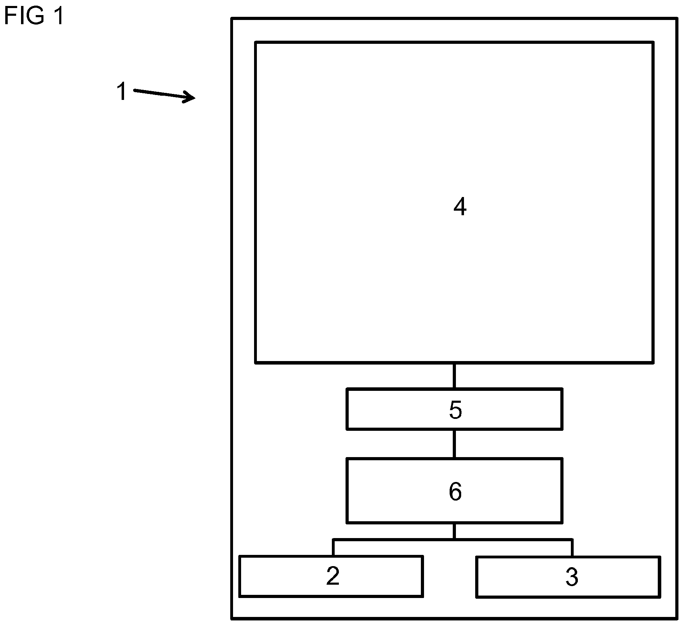

FIG 1 shows an augmented reality device 1. Augmented reality device 1 may, in an embodiment, be a mobile augmented reality device. It is also envisaged that augmented reality device 1 is a mobile device 1, in particular a mobile phone 1, a smart mobile phone 1, a tablet computer 1, a pair of virtual reality glasses 1 and/or a virtual reality headset 1 and/or a mobile handheld device 1.

Augmented reality device 1 comprises a display 4. Display 4 may, by way of non-limiting example, comprise a liquid crystal display and/or a display made up of organic light-emitting diodes, and/or electronic paper. Electronic paper in conjunction with an augmented reality device 1 or in conjunction with a mobile device 1 offers benefits in terms of reduced energy consumption. Electronic paper in conjunction with an augmented reality device 1 or in conjunction with a mobile device 1 also offers benefits in terms of improved battery life. Display 4 connects to a graphics driver unit 5 such as a graphics card 5. Graphics card 5 advantageously comprises a plurality of parallel graphics processors. Display 4 is configured to visually annunciate a status of an appliance based on status information data based on a graphics signal received from the graphics driver unit 5. The skilled person selects a suitable communication bus and/or a suitable physical connection to communicatively couple graphics driver unit 5 and display 4.

Display 4 can, by way of non-limiting example, be a monochrome display, a grayscale display, or a color screen with a suitable resolution. Suitable resolutions include, but are not limited to, 426 x 320 pixels, 470 x 320 pixels, 640 x 480 pixels, or 960 x 720 pixels etc.

Augmented reality device 1 also comprises a processor 6. Processor 6 may, by way of non-limiting example, comprise a microprocessor and/or a microcontroller. In an embodiment, processor 6 is based on a reduced instruction set architecture. In an alternate embodiment, processor 6 is based on a complex instruction set architecture. Processor 6 is communicatively coupled to graphics driver unit 5. The skilled person selects a suitable communication bus and/or a suitable communication bus protocol to communicatively couple processor 6 and graphics driver unit 5. According to an aspect, graphics driver unit 5 is an integral component of processor 6. That is, graphics driver unit 5 and processor 6 are arranged in the same chip, preferably on the same die.

A first wireless communication interface 2 enables connection of augmented reality device 1 to an appliance. According to an aspect, first wireless communication interface 2 is or comprises a camera, in particular a mobile phone camera. The camera advantageously provides functionality to take a picture of a quick response code that is attached to or secured relative to or printed on a housing of an appliance. The camera advantageously also provides functionality to take a picture of and/or to scan a barcode. In an alternate embodiment, the first wireless communication interface 2 is or comprises a radio frequency identification transponder. The radio frequency identification transponder is operable to read a tag for radio frequency identification. According to an aspect, the tag for radio frequency identification is a passive tag. That is, the tag for radio frequency identification does not connect to a power supply. In yet another embodiment, the first wireless communication interface 2 is or comprises a near field communication transponder. The near field communication transponder is operable to read a signal originating from another unit that provides near field communication. The near field communication transponder is, in particular, operable to read a signal originating from an appliance that provides near field communication.

First wireless communication interface 2 is communicatively coupled to processor 6. The skilled person selects a suitable communication bus and/or a suitable communication bus protocol to communicatively couple first wireless communication interface 2 and processor 6. According to an aspect, communication between first communication interface 2 and processor 6 is unidirectional as opposed to bidirectional. Processor 6 may only receive data from first wireless communication interface 2. First wireless communication interface 2 may not receive data from processor 6. Unidirectional communication offers benefits in terms of reduced complexity and in terms of lower cost. In an alternate embodiment, communication between first communication interface 2 and processor 6 is bidirectional.

A second wireless communication interface 3 enables connection of augmented reality device 1 to a remote server. According to an aspect, second wireless communication interface 3 is or comprises a wireless local area network unit and/or a Bluetooth® unit and/or a KNX® radio frequency unit, and/or an Enocean® unit and/or a Zigbee® unit. It is envisaged that second wireless communication interface 3 provides functionality for encrypted communication between augmented reality device 1 and a remote server. It is further envisaged that second wireless communication interface 3 is a wireless network adaptor and/or a wireless network card.

Second wireless communication interface 3 is communicatively coupled to processor 6. The skilled person selects a suitable communication bus and/or a suitable communication bus protocol to communicatively couple second wireless communication interface 3 and processor 6. Communication between second communication interface 3 and processor 6 is preferably bidirectional. Bidirectional communication enables augmented reality device 1 to send data to and to receive data from a remote server. Augmented reality device 1 may thus send a request to a remote server and obtain a response to its request.

Second wireless communication interface 3 communicating over a wireless bus advantageously provides a radio frequency module such as a module capable of quaternary phase-shift keying. It is also envisaged that the radio frequency module improves on data transmission by limiting sizes of message blocks and/or by extra data redundancy. These functionalities may prove useful in environments wherein communication between second wireless communication interface 3 and a remote server is hindered by obstacles such as concrete walls. These functionalities may also prove useful in environments wherein second wireless communication interface 3 communicates with a remote server over long distances.

First wireless communication interface 2 and second wireless communication interface 3 are preferably separate entitites.

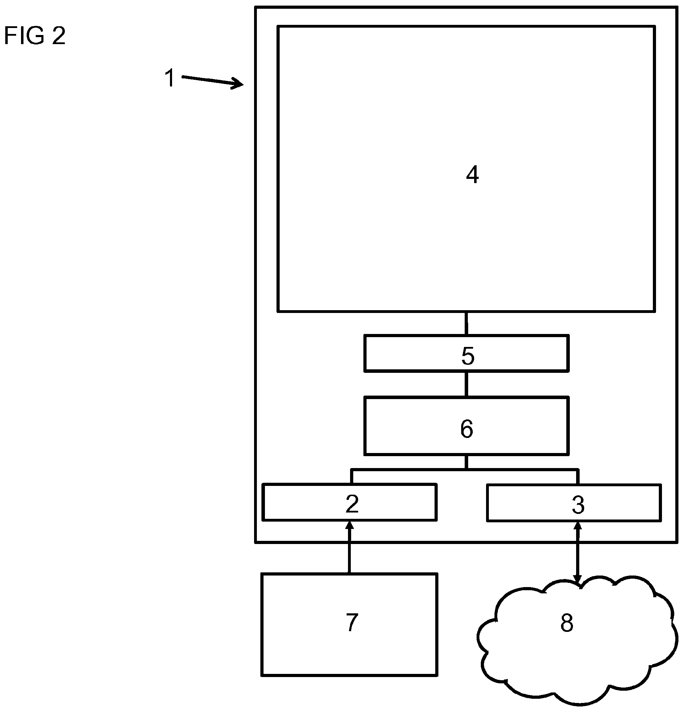

Now referring to FIG 2, an augmented reality device 1 is shown in communication with an appliance 7. Augmented reality device 1 also is communication with a remote server 8. According to an aspect, remote server 8 is or comprises a cloud server.

First communication interface 2 advantageously handles communication with appliance 7. To that end, first communication interface 2 may provide a scanner and/or a camera. First communication interface 2 then uses the scanner and/or the camera to read a barcode and/or a quick response code. The barcode and/or the quick response can be mounted to or secured relative to or affixed to or printed on a housing of appliance 7. In an alternate embodiment, first communication interface 2 provides an infrared receiver. First communication interface 2 then reads an infrared signal originating from appliance 7. To that end, an infrared transmitter can be mounted to or secured relative to or affixed to a housing of appliance 7. In yet another embodiment, first communication interface 2 provides a receiver for radio frequency identification signals. First communication interface 2 then reads a radio frequency identification signal originating from appliance 7. To that end, a radio frequency identification tag can be mounted to or secured relative to or affixed to a housing of appliance 7. In still another embodiment, first communication interface 2 provides a receiver for near field communication. First communication interface 2 then reads a near field communication signal originating from appliance 7. To that end, a transponder for near field communication can be mounted to or secured relative to or affixed to a housing of appliance 7.

First wireless communication interface 2 is thus communicatively coupled to an appliance 7.According to an aspect, communication between first communication interface 2 and appliance 7 is unidirectional as opposed to bidirectional. First communication interface 2 may only receive data and/or signals from appliance 7. First wireless communication interface 2 may not send data and/or signals to appliance 7. Unidirectional communication offers benefits in terms of reduced complexity and in terms of lower cost. In an alternate embodiment, communication between first communication interface 2 and appliance 7 is bidirectional. The skilled person selects a suitable communication bus and/or a suitable communication bus protocol to establish bidirectional communication between first wireless communication interface 2 and appliance 7.

Second communication interface 3 advantageously handles communication with remote server 8. To that end, second communication interface 3 may provide a radio frequency module. Second communication interface 3 reads radio frequency signals originating from remote server 8 using the radio frequency module. The radio frequency signals may, by way of non-limiting example, be signals originating from a wireless local area network and/or from a Bluetooth® network and/or a KNX® radio frequency network, and/or from an Enocean® network and/or from a Zigbee® network. Second communication interface 3 ideally also transmits such radio frequency signals to remote server 8. It is envisaged that second communication interface 3 also comprises an aerial to transmit and to receive such signals.

According to an aspect, a web server runs on remote server 8. The web server may listen for connections on transmission control protocol / internet protocol port 80 or 443. The web server of appliance 7 may optionally decrypt and encrypt traffic. The web server may rely on a Diffie-Hellman key exchange for such purposes. Remote server 8 also provides a remote wireless communication interface. Data are forwarded from the web server running on the remote server 8 to the remote wireless communication interface of remote server 8. The remote wireless communication interface modulates data originating from the web server to produce radio frequency signals. The radio frequency signals are then transmitted to augmented reality device 1 and received by second wireless communication interface 3. It is envisaged that the remote wireless communication interface also comprises an aerial to transmit and to receive such radio frequency signals.

Likewise, the remote wireless communication interface demodulates radio frequency signals originating from augmented reality device 1 to produce data. These data are then forwarded to the web server of remote server 8.

Second wireless communication interface 3 is thus communicatively coupled to remote server 8.According to an aspect, communication between second communication interface 3 and remote server 8 is bidirectional as opposed to unidirectional. The person with ordinary skill in the art selects a suitable communication bus and/or a suitable communication bus protocol to establish bidirectional communication between second wireless communication interface 3 and the web server of remote server 8. The skilled person may, in particular, select a connection-oriented communication bus protocol. According to an alternate aspect, the skilled person selects a connectionless communication bus protocol.

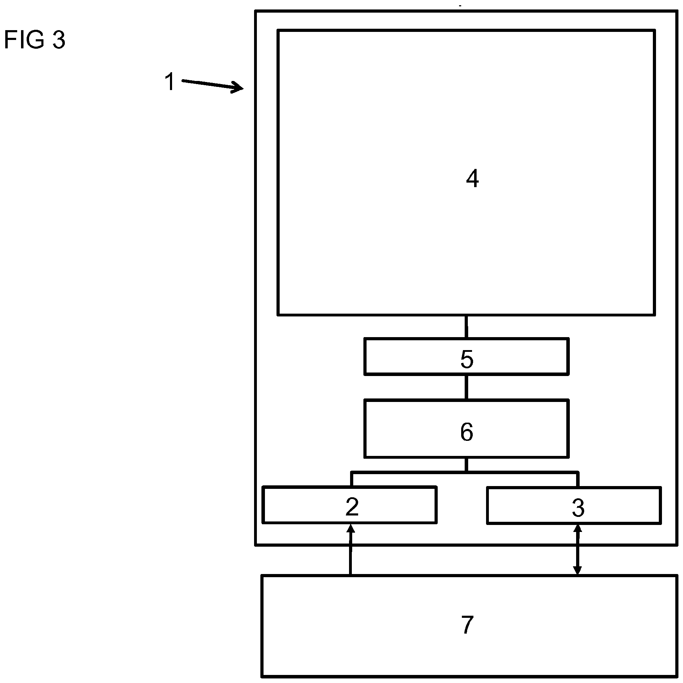

Now turning to FIG 3, an augmented reality device 1 is shown in communication with an appliance 7. The embodiment of FIG 3 assumes a first communication channel between first wireless communication interface 2 and appliance 7. Communication between first wireless communication interface 2 and appliance 7 operates as described in the notes on FIG 2. The embodiment of FIG 3 also assumes a second communication channel between second wireless communication interface 3 and appliance 7.

Second communication interface 3 advantageously enables bidirectional communication with appliance 7. To that end, second communication interface 3 may provide a radio frequency module. Second communication interface 3 then reads radio frequency signals originating from appliance 7. The radio frequency signals may, by way of non-limiting example, be signals originating from a wireless local area network and/or from a Bluetooth® network and/or a KNX® radio frequency network, and/or from an Enocean® network and/or from a Zigbee® network. Second communication interface 3 ideally also transmits such radio frequency signals to appliance 7. It is envisaged that second communication interface 3 also comprises an aerial to transmit and to receive such signals.

According to an aspect, a web server runs on appliance 7. The web server may listen for connections on transmission control protocol / internet protocol port 80 or 443. The web server of appliance 7 may optionally decrypt and encrypt traffic. The web server may rely on a Diffie-Hellman key exchange for such purposes. Appliance 7 also provides a remote wireless communication interface. Data are forwarded from the web server of appliance 7 to the remote wireless communication interface of appliance 7. The remote wireless communication interface modulates data originating from the web server of appliance 7 to produce radio frequency signals. The radio frequency signals are then transmitted to augmented reality device 1 and received by second wireless communication interface 3. It is envisaged that the remote wireless communication interface also comprises an aerial to transmit and to receive such radio frequency signals.

Likewise, the remote wireless communication interface of appliance 7 demodulates radio frequency signals originating from augmented reality device 1 to produce data. These data are then forwarded to the web server of appliance 7.

Second wireless communication interface 3 is thus communicatively coupled to appliance 7.According to an aspect, communication using the second communication channel between second communication interface 3 and appliance 7 is bidirectional as opposed to unidirectional. The person with ordinary skill in the art selects a suitable communication bus and/or a suitable communication bus protocol to establish bidirectional communication between second wireless communication interface 3 and the web server of appliance 7. The skilled person may, in particular, select a connection-oriented communication bus protocol. According to an alternate aspect, the skilled person selects a connectionless communication bus protocol.

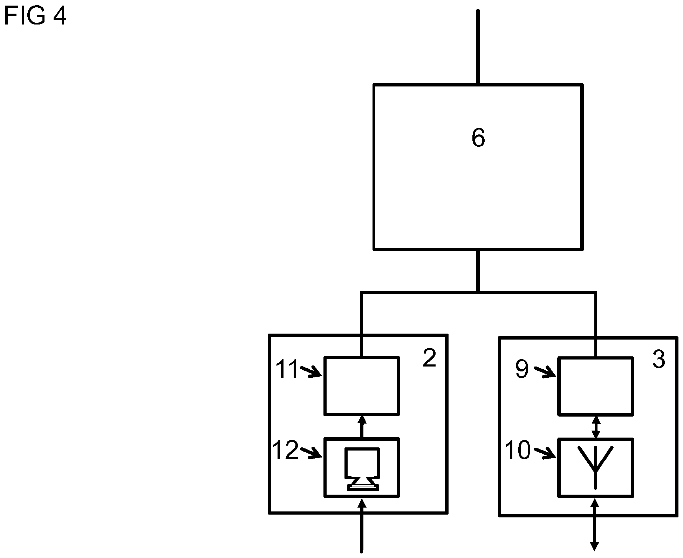

FIG 4 provides additional details of first 2 and second 3 wireless communication interfaces. First wireless communication interface 2 as shown on FIG 4 comprises a camera or a scanner 12. Camera or scanner 12 may, by way of non-limiting example, be a camera or a scanner recording visible light with wavelengths between 400 nm and 800 nm, especially between 500 nm and 800 nm, in a particular embodiment between 600 nm and 800 nm. A narrow range of wavelengths makes the arrangement less susceptible to interference. Camera or scanner 12 may, by way of another non-limiting example, be a camera or a scanner recording infrared light with wavelengths larger than 800 nm, especially larger than 950 nm, in a particular embodiment larger than 1200 nm. Use of infrared light proves useful when reading quick response codes or bar codes that are invisible to the human observer, because they are printed in the infrared domain.

Camera or scanner 12 communicatively couples to an image processor 11. Image processor 11 communicatively couples to processor 6. According to an aspect, image processor 11 is operable to process barcode signals. Image processor 11 thus receives signals from camera or scanner 12. Image processor 11 extracts barcode data from such signals. Image processor 11 eventually submits data indicative of a barcode and/or comprising barcode data to processor 6. It is envisaged that image processor 11 is an integral component of processor 6. That is, image processor 11 and processor 6 are arranged on the same chip. Ideally, image processor 11 and processor 6 are arranged on the same die.

According to an alternate aspect, image processor 11 is operable to process quick response code signals. Image processor 11 thus receives signals from camera or scanner 12. Image processor 11 extracts quick response code data from such signals. Image processor 11 eventually submits data indicative of a quick response code and/or comprising quick response code data to processor 6. It is envisaged that image processor 11 is an integral component of processor 6. That is, image processor 11 and processor 6 are arranged on the same chip. Ideally, image processor 11 and processor 6 are arranged on the same die.

Second wireless communication interface 3 as shown on FIG 4 comprises an aerial 10. Aerial 10 may, by way of non-limiting example, be an aerial for frequencies between 470 MHz and 862 MHz, for frequencies between 2.4 GHz and 2.5 GHz, and/or for frequencies between 5.0 GHz and 5.9 GHz. It is envisaged that aerial 10 is a directional antenna. Low frequencies offer benefits in terms of long range, whereas high frequencies offer benefits in terms of reduced interference. Directional antennae offer benefits in terms of improved signal to noise.

Aerial 10 communicatively couples to a demodulator/modulator unit 9. Demodulator/modulator unit 9 communicatively couples to processor 6. According to an aspect, demodulator/modulator unit 9 is operable to process amplitude-modulated signals and/or frequency-modulated signals. Demodulator/modulator unit 9 thus receives signals from aerial 10. Demodulator/modulator unit 9 extracts data and/or data packets from such signals. Demodulator/modulator unit 9 eventually submits data and/or data packets to processor 6. It is envisaged that demodulator/modulator unit 9 is an integral component of processor 6. That is, demodulator/modulator unit 9 and processor 6 are arranged on the same chip. Ideally, demodulator/modulator unit 9 and processor 6 are arranged on the same die.

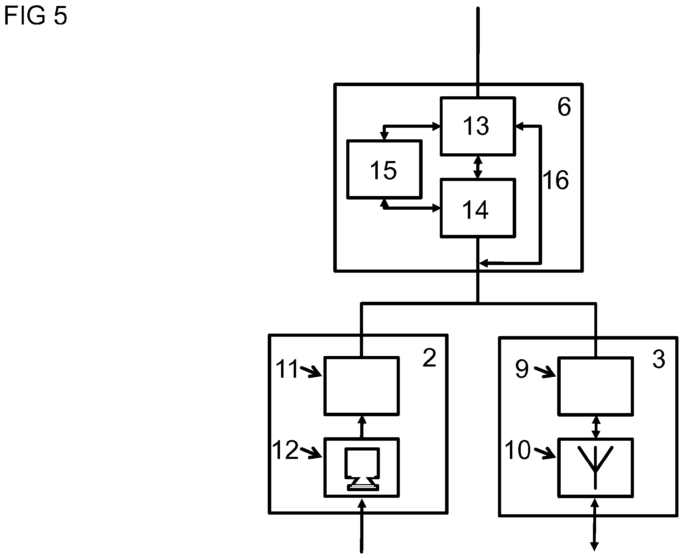

FIG 5 provides additional details of processor 6. Processor 6 as shown on FIG 5 comprises a decoder/encoder processor 14, a memory 15, and a microprocessor/microcontroller 13. According to an aspect, memory 15 is a non-volatile memory.

Decoder/encoder processor 14 is communicatively coupled to demodulator/modulator 9. Decoder/encoder processor 14 is also communicatively coupled to memory 15. Decoder/encoder processor 14 may thus read data from and/or send data to demodulator/modulator 9. In an embodiment, decoder/encoder processor 14 functions to decipher data read from demodulator/modulator 9. To that end, decoder/encoder processor 14 may employ a symmetric or an asymmetric key. The symmetric key may, in particular, be a key negotiated via a Diffie-Hellman key exchange. The asymmetric key may, in particular, be part of a public/private key pair. It is envisaged that decoder/encoder processor 14 reads a key such as an asymmetric key from memory 15 and employs that key to decipher data read from demodulator/modulator unit 9.

In an embodiment, decoder/encoder processor 14 can also function to encrypt data to be sent to demodulator/modulator 9. To that end, decoder/encoder processor 14 may employ a symmetric or an asymmetric key. The symmetric key may, in particular, be a key negotiated via a Diffie-Hellman key exchange. The asymmetric key may, in particular, be part of a public/private key pair. It is envisaged that decoder/encoder processor 14 reads a key such as an asymmetric key from memory 15 and employs that key to encrypt data to be sent to demodulator/modulator unit 9.

According to an aspect, decoder/encoder processor 14 is a dedicated-purpose controller such as an application-specific integrated circuit. Dedicated-purpose controllers such as application-specific integrated circuits are generally more effective at tasks such as encryption or decryption as compared to general purpose controllers. It is envisaged that decoder/encoder processor 14 is an integral component of processor 6. That is, decoder/encoder processor 14 and microcontroller/microprocessor 13 are arranged on the same chip. Ideally, decoder/encoder processor 14 and microcontroller/microprocessor 13 are arranged on the same die.

FIG 5 also shows an optional bypass link 16. Bypass link 16 enables direct communication between microcontroller/microprocessor 13 and demodulator/modulator unit 9. Bypass link 16 proves useful where no encoding or decoding is required. Bypass link 16 also proves useful where microcontroller/microprocessor 13 can directly process data originating from demodulator/modulator unit 9.

Microcontroller/microprocessor 13 is advantageously employed to carry out tasks other than decoding/encoding or processing of graphics signals. It is envisaged that the microcontroller microcontroller/microprocessor 13 runs an operating system. The operating system may, for instance, be an Android® operating system, a Windows® operating system, or a Linux® operating system such as Meego®. The operating system may be a system specifically tailored to augmented reality devices 1 and/or to mobile devices 1. The operating system may also be general-purpose.

Augmented reality device 1 may be used to monitor the battery status of a smoke detector in a structure. To that end, a scanner 2 of augmented reality device 1 reads a quick response code printed on an enclosure of a smoke detector. Scanner 2 then transmits quick response code data to processor 6. Processor 6 derives an identity of the smoke detector from the quick response code data. A request for information about battery status such as a GET request or a POST request is then produced based on the identity of the smoke detector. That request may actually be a uniform resource locator that comprises the identification of the smoke detector. The request is forwarded to Zigbee® adaptor 3. Zigbee® adaptor 3 modulates the data received from processor 6 and transmits the request to remote server 8. A response from remote server 8 is afterwards received by Zigbee® adaptor 3. Zigbee® adaptor 3 demodulates the received radio frequency signal and forwards the demodulated response to processor 6. The demodulated response may, for instance, indicate that the charging status of the battery of the smoke detector is 71%. Processor 6 then produces status information data indicative of a charging status of 71% and passes these data on to graphics driver unit 5. Graphics driver unit 5 produces a graphics signal as a function of, preferably as a direct function of, the data received from processor 6. Finally, the battery status is shown on (a semi-transparent) display 4 of augmented reality device 1.

Augmented reality device 1 may also be used to monitor the rate of energy transfer through a smart valve. To that end, a radio frequency identification reader 2 of augmented reality device 1 reads a radio frequency identification tag secured relative to an enclosure of a smart valve. Radio frequency identification reader 2 then transmits radio frequency identification data to processor 6. Processor 6 derives an identity of the smart valve from the radio frequency identification data. A request for information about energy transfer such as a GET request or a POST request is then produced based on the identity of the smart valve. That request may actually be a uniform resource locator that comprises the identification of the smart valve. The request is forwarded to Wi-Fi card 3. Wi-Fi card 3 modulates the data received from processor 6 and transmits the request to remote server 8. A response from remote server 8 is afterwards received by Wi-Fi card 3. Wi-Fi card 3 demodulates the received radio frequency signal and forwards the demodulated response to processor 6. The demodulated response may, for instance, indicate that current rate of energy transfer through the smart valve is 42 kiloWatts. Processor 6 then produces status information data indicative of a charging status of 71% and passes these data on to graphics driver unit 5. Graphics driver unit 5 produces a graphics signal as a function of, preferably as a direct function of, the data received from processor 6. Finally, the rate of energy transfer is shown on (an electronic paper) display 4 of augmented reality device 1.

In other words, the instant disclosure teaches any of the aforementioned augmented reality devices (1), wherein the first wireless communication interface (2) is configured to record an infrared light signal, wherein the infrared light signal has an optical wavelength exceeding 800 nm.

The infrared light signal preferably has an optical wavelength exceeding 950 nm, still more preferably exceeding 1100 nm. The first wireless communication interface (2) is advantageously configured to record an infrared light signal from a quick response code or from a barcode, wherein the respective code is legible only outside a range of wavelengths from 400 nm to 800 nm.

The instant disclosure also teaches any of the aforementioned augmented reality devices (1), wherein the first wireless communication interface (2) is configured to only read data originating from the appliance (7) such that any communication between the first wireless communication interface (2) and the appliance (7) is unidirectional from the appliance (7) to the interface (2).

The instant disclosure further teaches any of the aforementioned augmented reality devices (1), wherein the first wireless communication interface (2) is limited to only read data originating from the appliance (7) such that any communication between the first wireless communication interface (2) and the appliance (7) is unidirectional from the appliance (7) to the interface (2).

The instant disclosure further teaches any of the aforementioned augmented reality devices (1) or non-transitory computer readable media, wherein the processor (6) is configured to or is caused to perform:
encode the request data to produce encoded request data; and
send the encoded request data to the remote server (7;8) via the second wireless communication interface (3).

It is envisaged that the processor (6) comprises a decoder/encoder processor (14), the processor (6) being configured to:
encode the request data to produce encoded request data using its decoder/encoder processor (14).

The instant disclosure also teaches any of the aforementioned augmented reality devices (1), wherein the augmented reality device (1) comprises a non-volatile memory (15) readable by the processor (6), the non-volatile memory (15) storing a public key associated with at least one of:
a secret key of the appliance (7) or
a secret key of the remote server (7;8),
the processor (6) being configured to:
   read the public key from the non-volatile memory (15);
   encode the request data using the public key to produce encoded request data; and
   send the encoded request data to the remote server (7;8) via the second wireless communication interface (3).

The public key preferably is a public cryptographic key. The secret key preferably is a secret cryptographic key.

The instant disclosure also teaches any of the aforementioned augmented reality devices (1), wherein the augmented reality device (1) comprises a non-volatile memory (15) readable by the processor (6), the non-volatile memory (15) storing a public key associated with at least one of:
a secret key of the appliance (7) or
a secret key of the remote server (7;8),
the processor (6) being configured to:
   read the public key from the non-volatile memory (15);
   encode the received identity data using the public key to produce encoded identity data; and
   produce request data from the encoded identity data.

Encryption via public/private keys allows for authentication. Encryption puts the remote server (7;8) and/or the appliance (7) in a position to verify the identity of augmented reality device (1).

The instant disclosure further teaches any of the aforementioned augmented reality devices (1) or non-transitory computer readable media, wherein the processor (6) is configured to or is caused to perform:
receive via the second wireless communication interface (3) response data from the remote server (7;8) in response to the request data sent;
decode the received response data to produce decoded response data; and
produce status information data from the decoded response data.

It is envisaged that the processor (6) comprises a decoder/encoder processor (14), the processor (6) being configured to:
decode the received response data to produce decoded response data (14) using its decoder/encoder processor (14).

The instant disclosure further teaches any of the aforementioned augmented reality devices (1), wherein the augmented reality device (1) comprises a non-volatile memory (15) readable by the processor (6), the non-volatile memory (15) storing a cryptographic key, the processor (6) being configured to:
read the cryptographic key from the non-volatile memory (15); and
decode the received response data using the cryptographic key to produce decoded response data.

The instant disclosure further teaches any of the aforementioned augmented reality devices (1), wherein the second wireless communication interface (3) is configured to:
receive request data from the processor (6);
modulate the received request data to produce a request signal; and
send the request signal to the remote server (7;8).

It is envisaged that the second wireless communication interface (3) comprises an aerial (10) and a demodulator/modulator unit (9). The second wireless communication interface (3) is configured to:
modulate the received request data to produce a request signal using its demodulator/modulator unit (9); and
send the request signal to the remote server (7;8) using its aerial (10).

The instant disclosure further teaches any of the aforementioned augmented reality devices (1), wherein the processor (6) is configured to:
send the status information data to the graphics driver unit (5); and
wherein the graphics driver unit (5) is configured to:
   receive the status information data from the processor (6);
   produce the graphics signal from the received status information data (6); and
   send the graphics signal to the display (4);
wherein the display (4) is configured to:
   receive the graphics signal from the graphics driver unit (5); and
   display status information as a function, preferably as a direct function of, of the received graphics signal.

The display (4) advantageously is an electronic paper display.

Direct functions are limited to the arguments specified. Direct functions may contain parameters that are not treated as arguments.

The display (4) is preferably configured to display as a function of, preferably as a direct function of, the received graphics signal status information about a status of the appliance (7). The display (4) is yet more preferably configured to display as a function of, preferably as a direct function of, the received graphics signal status information about an internal status of the appliance (7). In so doing, the augmented reality device practically replaces a status led or a screen indicating an internal status of the appliance (7).

The instant disclosure also teaches any of the aforementioned augmented reality devices (1), wherein the display (4) is configured to only receive data originating from the graphics driver unit (5) such that any communication between the display (4) and the graphics driver unit (5) is unidirectional from the graphics driver unit (5) to the display (4).

The instant disclosure further teaches any of the aforementioned augmented reality devices (1), wherein the display (4) is limited to only receive data originating from the graphics driver unit (5) such that any communication between the display (4) and the graphics driver unit (5) is unidirectional from the graphics driver unit (5) to the display (4).

The instant disclosure further teaches any of the aforementioned augmented reality devices (1) or non-transitory computer readable media, wherein the processor (6) is configured to or is caused to perform:
receive identity data indicative of the identity of the appliance (7) from the first wireless communication interface (2);
decode the received identity data to produce decoded identity data; and
produce request data from the decoded identity data.

The instant disclosure also teaches any of the aforementioned augmented reality devices (1), wherein the augmented reality device (1) comprises a non-volatile memory (15) readable by the processor (6), the non-volatile memory (15) storing a cryptographic key, the processor (6) being configured to:
read the cryptographic key from the non-volatile memory (15); and
decode the received identity data using the cryptographic key to produce decoded identity data.

The instant disclosure further teaches any of the aforementioned augmented reality devices (1) or non-transitory computer readable media, wherein the remote server (7;8) is located remotely from the augmented reality device (1). In an embodiment, the appliance (7) comprises the remote server (7;8).

The first wireless communication interface (2) is advantageously different from the second wireless communication interface (3).

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing from the scope of the disclosure as defined by the following claims. It should also be understood that the disclosure is not restricted to the illustrated embodiments and that various modifications can be made within the scope of the following claims.

### Reference numerals

1 augmented reality device, in particular mobile device
2 first wireless communication interface
3 second wireless communication interface
4 display, in particular liquid crystal display and/or display comprising organic light-emitting diodes
5 graphics driver unit, in particular graphics card
6 processor, in particular microprocessor and/or microcontroller
7 appliance
8 remote server
9 demodulator/modulator unit
10 receiving unit, in particular antenna
11 demodulator/modulator unit, in particular image processor
12 receiving unit, camera
13 microprocessor and/or microcontroller
14 decoder/encoder processor
15 memory, in particular non-volatile memory
16 bypass link

## Claims

1. An augmented reality device (1) comprising:
a first wireless communication interface (2) configured to receive from an appliance (7) identity data indicative of an identity of the appliance (7);
a second wireless communication interface (3) configured for bidirectional communication with a remote server (7;8);
a display (4);
a graphics driver unit (5) configured to produce a graphics signal and to send the graphics signal to the display (4);
a processor (6) communicatively coupled to the graphics driver unit (5), to the first wireless communication interface (2), and to the second wireless communication interface (3), the processor (6) being configured to:
receive identity data indicative of the identity of the appliance (7) from the first wireless communication interface (2);
produce request data from the received identity data;
send the request data to the remote server (7;8) via the second wireless communication interface (3);
receive via the second wireless communication interface (3) response data from the remote server (7;8) in response to the request data sent;
produce status information data from the received response data; and
send the status information data to the display (4) via the graphics driver unit (5).

2. The augmented reality device (1) according to claim 1, wherein the first wireless communication interface (2) is configured to record an infrared light signal, wherein the infrared light signal has an optical wavelength exceeding 800 nm.

3. The augmented reality device (1) according to any of the claims 1 to 2, wherein the first wireless communication interface (2) is configured to only read data originating from the appliance (7) such that any communication between the first wireless communication interface (2) and the appliance (7) is unidirectional from the appliance (7) to the interface (2).

4. The augmented reality device (1) according to any of the claims 1 to 3, wherein the processor (6) is configured to:
encode the request data to produce encoded request data; and
send the encoded request data to the remote server (7;8) via the second wireless communication interface (3).

5. The augmented reality device (1) according to claim 4, wherein the augmented reality device (1) comprises a non-volatile memory (15) readable by the processor (6), the non-volatile memory (15) storing a public key associated with at least one of:
a secret key of the appliance (7) or
a secret key of the remote server (7;8),
the processor (6) being configured to:
read the public key from the non-volatile memory (15);
encode the request data using the public key to produce encoded request data; and
send the encoded request data to the remote server (7;8) via the second wireless communication interface (3).

6. The augmented reality device (1) according to any of the claims 1 to 5, wherein the augmented reality device (1) comprises a non-volatile memory (15) readable by the processor (6), the non-volatile memory (15) storing a public key associated with at least one of:
a secret key of the appliance (7) or
a secret key of the remote server (7;8),
the processor (6) being configured to:
read the public key from the non-volatile memory (15);
encode the received identity data using the public key to produce encoded identity data; and
produce request data from the encoded identity data.

7. The augmented reality device (1) according to any of the claims 1 to 6, wherein the processor (6) is configured to:
receive via the second wireless communication interface (3) response data from the remote server (7;8) in response to the request data sent;
decode the received response data to produce decoded response data; and
produce status information data from the decoded response data.

8. The augmented reality device (1) according to claim 7, wherein the augmented reality device (1) comprises a non-volatile memory (15) readable by the processor (6), the non-volatile memory (15) storing a cryptographic key, the processor (6) being configured to:
read the cryptographic key from the non-volatile memory (15); and
decode the received response data using the cryptographic key to produce decoded response data.

9. The augmented reality device (1) according to any of the claims 1 to 8, wherein the second wireless communication interface (3) is configured to:
receive request data from the processor (6);
modulate the received request data to produce a request signal; and
send the request signal to the remote server (7;8).

10. The augmented reality device (1) according to any of the claims 1 to 9, wherein the processor (6) is configured to:
send the status information data to the graphics driver unit (5); and
wherein the graphics driver unit (5) is configured to:
receive the status information data from the processor (6);
produce the graphics signal from the received status information data (6); and
send the graphics signal to the display (4);
wherein the display (4) is configured to:
receive the graphics signal from the graphics driver unit (5); and
display status information as a function of the received graphics signal.

11. The augmented reality device (1) according to any of the claims 1 to 10, wherein the display (4) is configured to only receive data originating from the graphics driver unit (5) such that any communication between the display (4) and the graphics driver unit (5) is unidirectional from the graphics driver unit (5) to the display (4).

12. The augmented reality device (1) according to any of the claims 1 to 11, wherein the processor (6) is configured to:
receive identity data indicative of the identity of the appliance (7) from the first wireless communication interface (2);
decode the received identity data to produce decoded identity data; and
produce request data from the decoded identity data.

13. The augmented reality device (1) according to claim 12, wherein the augmented reality device (1) comprises a non-volatile memory (15) readable by the processor (6), the non-volatile memory (15) storing a cryptographic key, the processor (6) being configured to:
read the cryptographic key from the non-volatile memory (15); and
decode the received identity data using the cryptographic key to produce decoded identity data.

14. The augmented reality device (1) according to any of the claims 1 to 13, wherein the remote server (7;8) is located remotely from the augmented reality device (1).

15. A non-transitory, tangible computer readable medium having instructions executable by a processor (6) of an augmented reality device (1) and/or of a mobile device (1) that, when executed by the processor (6), cause the processor of the augmented reality device (1) and/or of the mobile device (1), the device (1) comprising a first wireless communication interface (2), a second wireless communication interface (3), a display (4), and a graphics driver unit (5) in communication with the display (4), to perform:
receiving identity data indicative of an identity of an appliance (7) from the first wireless communication interface (2);
producing request data from the received identity data; sending the request data to a remote server (7;8) via the second wireless communication interface (3);
receiving via the second wireless communication interface (3) response data from the remote server (7;8) in response to the request data sent;
producing status information data from the received response data; and
sending the status information data to the display (4) via the graphics driver unit (5).
